# EUROPEAN PATENT SPECIFICATION

(11) **EP 4 216 357 B1**
(45) Date of publication and mention of the grant of the patent: **14.10.2026**
(21) Application number: 23151171.8
(22) Date of filing: 11.01.2023
(51) Int. Cl.: H01M 50/367

(54) **BATTERY PACK**
BATTERIEPACK
BLOC-BATTERIE

(30) Priority: 20.01.2022 KR 20220008645
(43) Date of publication of application: 26.07.2023
(73) Proprietor: SK On Co., Ltd., Seoul 03161 (KR)
(72) Inventor: JEON, Hae Ryong, 34124 Daejeon (KR)
(74) Representative: Prüfer & Partner mbB Patentanwälte · Rechtsanwälte

(56) References cited:
- EP-B1- 2 002 496
- US-A1- 2015 295 215
- US-A1- 2021 320 374

## Description

### TECHNICAL FIELD

The present disclosure relates to a battery pack having a cell stack in which a plurality of battery cells are stacked, and more particularly, to a battery pack capable of discharging gas generated in the cell stack externally.

### BACKGROUND

Unlike primary batteries, secondary batteries may be charged and discharged, and may thus be applied to devices within various fields such as digital cameras, mobile phones, notebook computers, hybrid vehicles, and electric vehicles. Examples of secondary batteries include a lithium secondary battery, a nickel-cadmium battery, a nickel-metal hydride battery, a nickel-hydrogen battery, and the like.

Such a secondary battery is manufactured as a pouch-type battery cell having flexibility or a prismatic or cylindrical can-type battery cell having rigidity. A plurality of battery cells may be stacked to form a cell stack. The cell stack is disposed inside a case (housing, frame) to constitute a battery device such as a battery module or a battery pack.

On the other hand, in the case of various events such as cases in which the lifespan of a battery cell approaches the end point, a swelling phenomenon occurs in the battery cell, overcharging occurs in the battery cell, the battery cell is exposed to heat, a sharp object such as a nail penetrates through a casing of the battery cell or an external shock is applied to the battery cell, the battery cell may be ignited. A flame or high-temperature gas (including electrolyte gas and combustion materials) ejected from a battery cell may cause a chain ignition of other neighboring battery cells accommodated inside the battery pack.

When the flame generated from the battery pack is exposed externally, there is a problem in which other components around the battery pack may be broken or damaged, and other components may also lead to secondary ignition (chain ignition) .

Chinese Patent Publication CN 110190211 A discloses a battery pack having a configuration in which a high-temperature gas or flames generated in a battery cell flow through a flow space. The prior art has a configuration in which a cell stack in which a plurality of battery cells are stacked is installed inside the packing case, and the internal space of the packing case is partitioned to accommodate the plurality of cell stacks. In the prior art, the high-temperature gas or flames generated in the battery cell flow through the flow space formed in the cross member, the side wall member, the bottom member, and the like. The flow space is formed to correspond to respective cell stacks.

In the case of the prior art, the flow space corresponding to respective cell stacks is configured to communicate with a plurality of inlets such that a high-temperature gas or flames generated in the space in which the respective cell stacks are installed may be introduced. Accordingly, a high-temperature gas or flames generated in some battery cells provided in each cell stack may be introduced into the flow space through inlets corresponding to said some battery cells.

However, in the prior art, since the flow space corresponding to each cell stack communicates with a plurality of inlets, there is a problem in that the high-temperature gas or flames introduced into the flow space through some inlets flows through the flow space and is discharged to other battery cells constituting the respective cell stacks through other inlets. For example, in the prior art, high-temperature gas or flames generated in some battery cells of one cell stack may be transferred to other battery cells constituting the cell stack without being discharged externally through the flow space. There is a problem in that the high-temperature gas or flames transferred to other battery cells may cause secondary ignition or chain ignition of a plurality of battery cells constituting the cell stack. Patent document 2 discloses an Energy Storage System (ESS) module including a cell stack assembly including a cell stack formed by stacking a plurality of battery cells and a plurality of mica barrier assemblies and a pair of bus bar frames coupled to both side portions of the cell stack; and a housing configured to accommodate the cell stack assembly and having a plurality of flow path holes formed at locations corresponding to a front side, a rear side and both side portions of the cell stack assembly, wherein the mica barrier assembly is provided between adjacent battery cells and at an outermost side of the cell stack to form a flow path along a stacking direction of the cell stack at a temperature lower than a reference temperature and to block the flow path at a temperature equal to or higher than the reference temperature. Patent document 3 discloses a power storage device comprising a plural cell, an exhaust passage and a sealing plate. The plural cells is aligned in a first direction, each of the cells includes a gas discharging valve for discharging a gas generated in the cell, each of the gas discharging valves is provided on a first side in a second direction of the cell, and the second direction is orthogonal to the first direction. The exhaust passage is configured to discharge the gas discharged from each of the gas discharging valves, extends in the first direction, and has an opening at a first end in the first direction. The sealing plate is provided at a second end of the exhaust passage in the first direction, includes plural recesses on a surface on the exhaust passage side of the sealing plate, and made of a resin.

### [Prior art literature]

### [Patent Literature]

(Patent Document 1) CN 110190211 A
(Patent Document 2) US 2021/320374 A1
(Patent Document 3) US 2015/295215 A1

### SUMMARY

An aspect of the present disclosure is to provide a battery pack capable of preventing or significantly reducing gas or flames generated from some battery cells included in a cell stack from affecting other battery cells included in the cell stack.

Another aspect of the present disclosure is to provide a battery pack capable of delaying or significantly reducing secondary ignition and/or thermal runaway of a cell stack.

According to an aspect of the present disclosure, a battery pack includes at least one cell stack provided by stacking a plurality of battery cells; a packing case having an accommodating space accommodating the at least one cell stack; and at least one duct member disposed in the packing case and having a flow space through which gas or flames discharged from the cell stack flow. The duct member is disposed to face a side surface of the cell stack and includes a plurality of flow paths partitioned from each other to separate flow of the gas or flames introduced into the flow space from each other, and each of the plurality of flow paths communicates with at least one inlet disposed on a side surface of the duct member. The battery cell has a shape extending in the first direction, and the cell stack is formed by stacking the plurality of battery cells in a second direction perpendicular to the first direction. The duct member includes a duct body forming the flow space and at least one partition wall dividing the flow space into the plurality of flow paths, and the at least one partition wall includes a shape extending in the second direction so that gas or flames are configured to flow in the second direction.

In an embodiment, the battery cell includes a casing having a shape extending in the first direction, a plurality of electrode terminals installed in the casing, and a gas discharge unit for discharging the gas inside the casing externally of the casing, the gas discharge unit may be located at one or both ends of the casing in the first direction, and the inlet may be located opposite the gas discharge unit.

In an embodiment, the duct member may have a plurality of inlets respectively corresponding to each of the plurality of battery cells.

In an embodiment, the inlet may be disposed at a height corresponding to a height of the gas discharge unit.

In an embodiment, the battery cell may have a shape extending in the first direction, and may include an electrode terminal at one or both ends in the first direction, and the inlet may be positioned to face the electrode terminal.

According to the invention the cell stack is formed by stacking the plurality of battery cells in a second direction perpendicular to the first direction, and the plurality of flow paths has a shape extending in the second direction.

The duct member includes a duct body forming the flow space and having a plurality of inlets, and at least one partition wall dividing the flow space into the plurality of flow paths, and a plurality of the inlets may be disposed on at least one side of the duct body.

The partition wall includes a shape extending in the second direction. In this case, at least a portion of the partition walls may have an L-shaped cross-sectional shape.

In an embodiment, the duct member has a shape in which one end of the duct body is closed, and the duct body may have a plurality of outlets formed at the other end thereof.

In an embodiment, the duct body may comprise a plurality of inlets formed on each of both sides of the first direction, and the duct member separates the flow of the gas or flames introduced from both sides of the duct body from each other to separate the flow space from each other. It may further include a central partition wall dividing. In this case, the central partition wall may have a shape that crosses the inside of the duct body in a third direction perpendicular to the first direction and the second direction, respectively.

On the other hand, the battery pack according to an embodiment may further include a venting unit for discharging the gas discharged through the outlet externally of the packing case.

In addition, the battery pack according to an embodiment may further include a connection duct connecting the duct member and the venting unit such that the gas flowing through the duct member is discharged to the venting unit.

In an embodiment, the battery cell has a shape extending in a first direction, the cell stack is formed by stacking the plurality of battery cells in a second direction perpendicular to the first direction, the cell stack may be divided into a plurality of cell groups in which a plurality of battery cells are respectively grouped, and the plurality of flow paths may be formed to correspond to the plurality of cell groups, respectively.

The battery pack according to an embodiment may further include a heat insulating member disposed between the cell groups to block propagation of flame or high-temperature thermal energy between adjacent battery cells.

In an embodiment, the duct member may constitute a cross member crossing at least a portion of the packing case.

In an embodiment, the duct member may be positioned between a side wall member of the packing case and the cell stack, or may constitute a side wall member of the packing case.

According to an aspect of the present disclosure, a battery pack includes at least one cell stack including a plurality of cell groups in which a plurality of battery cells are grouped; a packing case having an accommodating space for accommodating the at least one cell stack; and at least one duct member disposed in the packing case and having a flow space through which the gas or flames discharged from the cell stack flow. The duct member is disposed to face the side surface of the cell stack. The flow space of the duct member has a shape that the flow space is divided into a plurality of flow paths and each of the plurality of flow paths corresponds to the plurality of cell groups, to block the gas or flames generated in one cell group from flowing to another cell group through the flow space.

According to an aspect of the present disclosure, a battery pack includes at least one cell stack including a plurality of battery cells; a packing case having an accommodating space for accommodating at least one of the cell stacks, the packing case having a bottom member, a plurality of side wall members, and a cover member; and at least one duct member disposed in the packing case and having a flow space through which the gas or flames discharged from the cell stack flow. The duct member is disposed in a direction parallel to at least one of the plurality of side wall members, the duct member includes at least one partition wall dividing the flow space into a plurality of flow paths, and each of the plurality of flow paths communicates with at least one inlet formed on a side surface of the duct member.

The duct member may constitute a cross member crossing at least a part of the accommodation space.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view of a battery pack according to an embodiment;
FIG. 2 is a perspective view illustrating a state in which the case body and the cell stack are separated from FIG. 1;
FIG. 3 is a perspective view of a cell stack according to an embodiment;
FIG. 4 is an enlarged view of the portion "A" of Figure 2;
FIG. 5 is an exploded perspective view of a duct member according to an embodiment;
FIG. 6 is a cross-sectional view taken along line I-I' of FIG. 4;
FIG. 7 is a cross-sectional view taken along line II-II' of FIG. 4;
FIG. 8 is a plan view of FIG. 2, along with a cross-sectional view taken along line III-III';
FIG. 9 is a plan view of a battery pack according to another embodiment, along with cross-sectional views taken along lines IV-IV' and V-V' ;
FIG. 10 is a perspective view illustrating a modified example of the duct member;
FIG. 11 is an exploded perspective view of the duct member illustrated in FIG. 10;
FIG. 12 is a cross-sectional view taken along line VI-VI' of FIG. 10;
FIG. 13 is a plan view of a battery pack according to another embodiment, illustrating cross-sectional views taken along lines VII-VII' and VIII-VIII'; and
FIG. 14 is a plan view of a battery pack according to another embodiment.

### DETAILED DESCRIPTION

The following detailed description is provided to assist the reader in gaining a comprehensive understanding of the methods, apparatuses, and/or systems described herein. The sequences of operations described herein are merely examples, and are not limited to those set forth herein, but may be changed as will be apparent to one of ordinary skill in the art, with the exception of operations necessarily occurring in a certain order. Also, descriptions of functions and constructions that would be well known to one of ordinary skill in the art may be omitted for increased clarity and conciseness.

The features described herein may be embodied in different forms, and are not to be construed as being limited to the examples described herein.

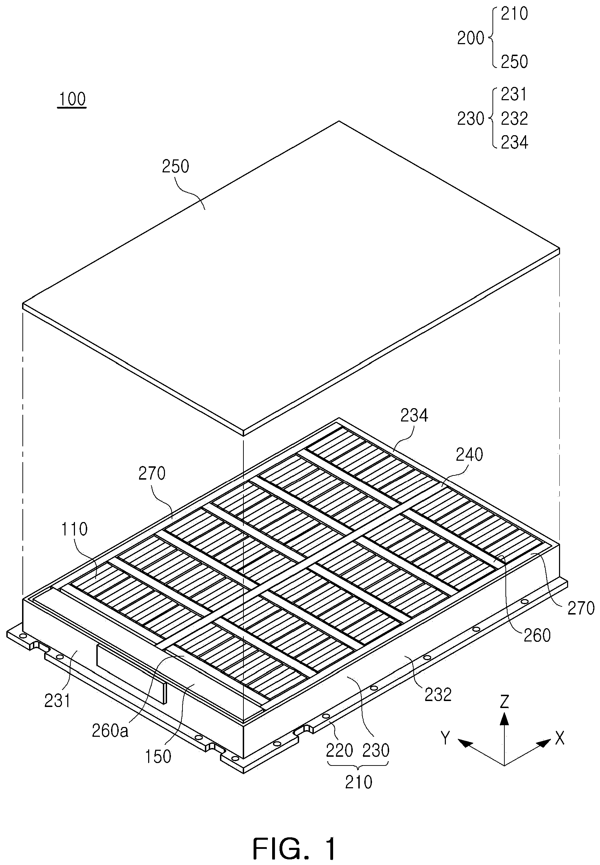

First, a battery pack 100 according to an embodiment will be described with reference to FIGS. 1 to 8.

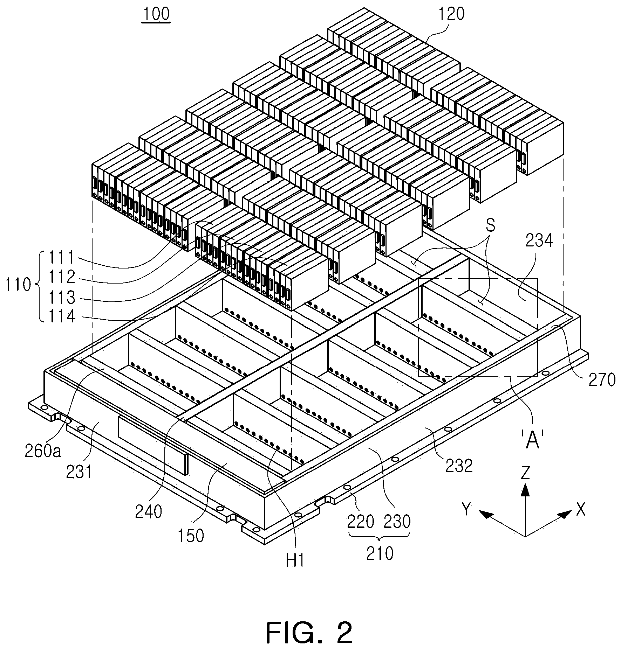

FIG. 1 is a perspective view of a battery pack 100 according to an embodiment, and FIG. 2 is a perspective view illustrating a state in which the case body 210 and the cell stack 110 are separated in FIG. 1.

Referring to FIGS. 1 and 2, a battery pack 100 according to an embodiment may include at least one cell stack 110, a packing case 200, and a duct member 260.

The cell stack 110 may be formed by stacking a plurality of battery cells 120. As an example, the battery cells 120 may have a shape extending in the first direction (X) and may be stacked in a second direction (Y) perpendicular to the first direction (X). In addition, the cell stack 110 may be stacked in a standing state in the third direction Z, perpendicular to the first and second directions, respectively.

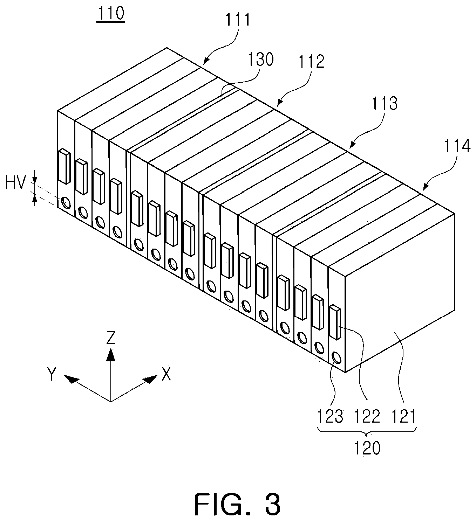

Each cell stack 110 may be divided into a plurality of cell groups 111, 112, 113, and 114. As an example, each cell stack 110 may include four cell groups 111, 112, 113 and 114. A detailed description of the cell stack 110 and the cell groups 111, 112, 113, and 114 will be described later with reference to FIG. 3.

The packing case 200 may accommodate at least one cell stack 110, and an accommodation space S for accommodating each cell stack 110 may be formed.

The packing case 200 may be configured to include a bottom member 220 for supporting the bottom surface of the cell stack 110, a cover member 250 for covering the top surface of the cell stack 110, and a side wall member 230 connecting between the bottom member 220 and the cover member 250. The bottom member 220 and the side wall member 230 may be coupled to each other to form the case body 210. In the case body 210, an accommodation space S capable of accommodating the cell stack 110 may be formed.

When the bottom member 220 has a rectangular shape, the side wall member 230 may be configured as four. The side wall member 230 may include a front wall 231 located in front of the packing case 200, a rear wall 234 located at the rear of the packing case 200, and two side walls 232 connecting the front wall 231 and the rear wall 234.

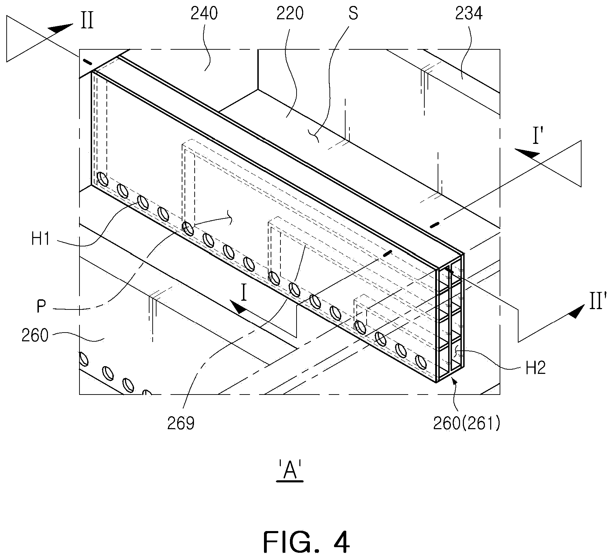

When a plurality of cell stacks 110 are accommodated in the packing case 200, a plurality of accommodating spaces S partitioned from each other may be formed in the packing case 200. The plurality of accommodating spaces (S) may be partitioned by cross members (240, 260) crossing at least a portion of the accommodating spaces (S) . In this case, the cross members 240 and 260 may include a partition member 240 installed across the receiving space (S) to reinforce the rigidity of the packing case 200, and/or a flow space (P in FIG. 4) is formed therein, and the duct member 260 is installed across at least a portion of the accommodation space (S). In an embodiment, at least a portion of the duct member 260 may constitute a cross member crossing at least a portion of the accommodation space (S) .

As an example, the partition member 240 may be configured to cross the receiving space (S) in the first direction (X), and the duct member 260 may be configured to cross between the partition member 240 and the side wall 232 in the second direction Y. However, the arrangement structure and number of the cross members 240 and 260 forming the partitioned accommodation space S may be variously changed.

In addition, the duct member 260 may be installed in a direction parallel to at least one of the plurality of side wall members 230. As an example, the duct member 260 may extend in a direction parallel to the front wall 231 and the rear wall 234.

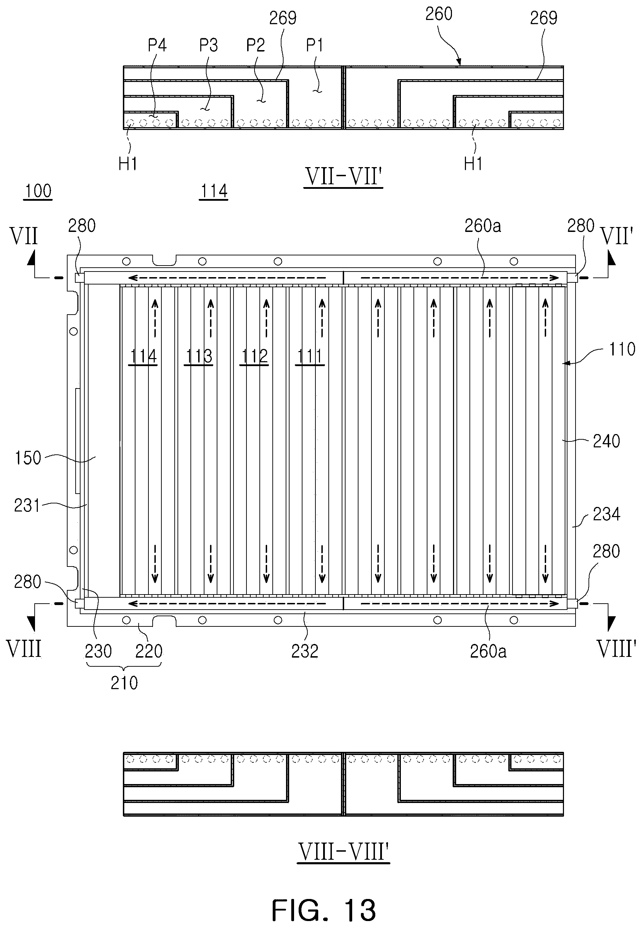

However, in the embodiment, it is also possible that only one cell stack 110 is accommodated in the packing case 200 or that the accommodation space S is not divided into a plurality of spaces. In this case, it is also possible that the packing case 200 is not provided with a cross member (refer to the embodiment of FIG. 13).

A portion (260) of the duct members 260 and 260a may have a structure that partitions the receiving space (S) in which the cell stack 110 is accommodated, and the portion 260a may be disposed on the edge of the accommodation space S. The duct members 260 and 260a form a flow space (P in FIG. 4) in which a high-temperature gas (hereinafter, in the detailed description and claims, 'gas' is defined as including electrolyte gas and combustion products) or a flame moves. The duct members 260 and 260a may include a plurality of inlets H1 such that the high-temperature gas and/or flame generated in the battery cell 120 may be introduced into the flow space P. The duct members 260 and 260a may be installed to face a side surface of the cell stack 110.

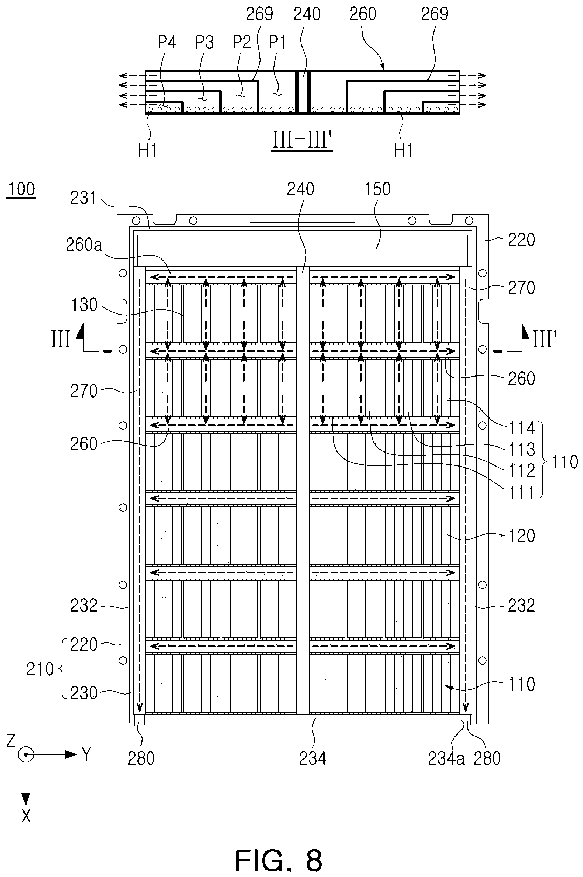

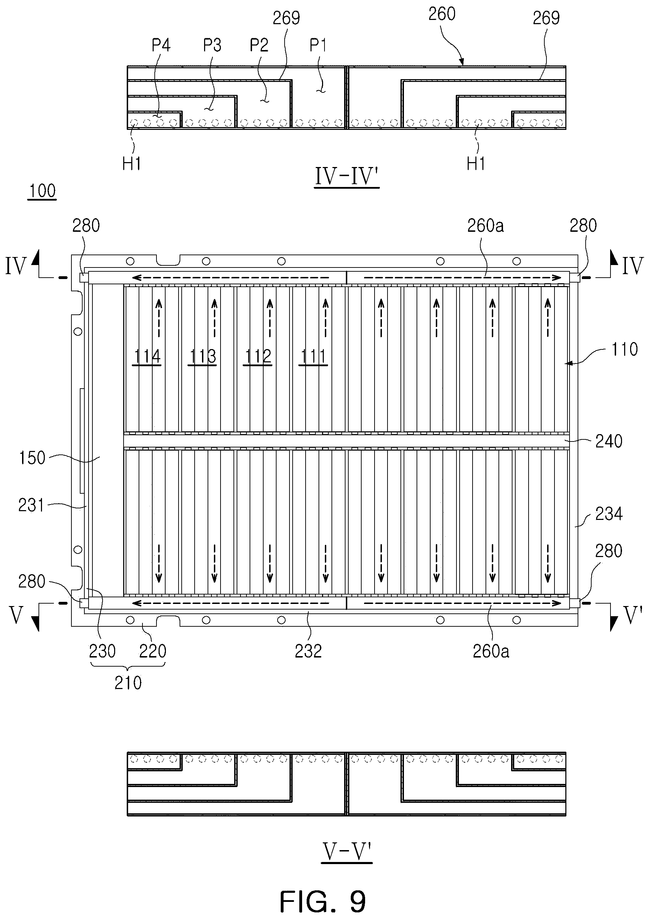

In an embodiment, the duct member 260 may be connected to the connection duct 270. Accordingly, the high-temperature gas and/or flame introduced into the flow space P may flow through the duct member 260 and the connection duct 270. The gas flowing through the connection duct 270 may be discharged externally of the packing case 200 through a venting unit (280 in FIG. 8) provided in the packing case 200. However, in the embodiment, the connection duct 270 is not an essential configuration, and it is also possible that high-temperature gas and/or flame are discharged externally of the packing case 200 after flowing through the duct members 260 and 260a (refer to the embodiment of FIG. 9).

A battery control unit 150 for controlling the battery cells 120 may be disposed inside the packing case 200. The battery control unit 150 may include a battery management system (BMS) and the like. Since the configuration of the battery control unit 150 is known in various forms, a detailed description thereof will be omitted.

Next, the cell stack 110 will be described in more detail with reference to FIG. 3. FIG. 3 is a perspective view of the cell stack 110 according to an embodiment. In FIG. 3, the height direction Z of the battery cell 120 is illustrated in an exaggerated form.

As illustrated in FIG. 3, the cell stack 110 may include a plurality of battery cells 120.

The battery cell 120 may be configured as a secondary battery. For example, the battery cell 120 may include a lithium secondary battery, a nickel-cadmium battery, a nickel-metal hydride battery, a nickel-hydrogen battery, and the like.

The battery cell 120 may be configured as a prismatic secondary battery in which an electrode assembly (not illustrated) is accommodated in a casing 121 having rigidity. However, in the embodiment, the battery cell 120 is not limited to a prismatic secondary battery. For example, in an embodiment, the battery cell 120 is composed of a pouch type secondary battery in which the electrode assembly is accommodated in the flexible casing (pouch) 121, and it is also possible to have a configuration in which a plurality of pouch-type secondary batteries are bundled. In addition, in the embodiment, a cylindrical secondary battery is not excluded as the battery cell 120. For convenience of description, in the embodiment, a prismatic secondary battery will be described as an example of the battery cell 120.

The battery cell 120 may include a casing 121 in which an electrode assembly (not illustrated) and an electrolyte are accommodated therein, and a plurality of electrode terminals (electrode leads) 122 exposed externally of the casing 121. The casing 121 has a shape extending in the first direction (X), and the electrode terminal 122 may be positioned at one or both ends of the casing 121 in the first direction (X).

The electrode assembly includes a plurality of electrode plates and electrode tabs and is accommodated in the casing 121. In this case, the electrode plate may be composed of a positive electrode plate and a negative electrode plate. The electrode assembly may be stacked in a state in which wide surfaces of the positive and negative plates face each other. The positive and negative plates may be stacked with a separator interposed therebetween.

An electrode tab (not illustrated) may be provided on each of the plurality of positive plates and the plurality of negative plates. Each of the electrode tabs may be connected to an electrode terminal (electrode lead) 122 such that the same polarities are in contact with each other.

The electrode terminal 122 may include a positive terminal and a negative terminal. The positive terminal may be provided at either end of the casing 121, and the negative terminal may be provided at the other one of both ends of the casing 121.

In the case of the battery cell 120 illustrated in FIG. 3, the two electrode terminals 122 may have a structure in which they face each other in opposite directions. However, the arrangement position or number of the electrode terminals 122 may be variously changed.

The battery cell 120 may include a gas discharge unit 123 for discharging the gas inside the casing 121 externally of the casing 121. The gas discharge unit 123 may be located at one or both ends of the casing 121 in the first direction (X). For example, the gas discharge unit 123 may be installed at any one of both ends of the casing 121, but it is also possible to be installed at both ends. In addition, when the length of the casing 121 is long, the gas discharge unit 123 may be installed at both ends of the casing 121 to easily discharge the gas inside the casing 121. The gas discharge unit 123 may be disposed at a position corresponding to the inlet (H1 in FIGS. 1 and 4).

The cell stack 110 may have a shape in which a plurality of battery cells 120 are stacked. For example, the battery cells 120 may be stacked in the second direction Y while being erected in the third direction Z. For example, the battery cells 120 may be stacked in the second direction (Y) in a state in which the wide side faces the second direction (Y).

The battery cells 120 provided in the cell stack 110 may be electrically connected to each other by electrically conductive bus bars (not illustrated). The battery cells 120 may be connected in series and/or in parallel by bus bars. Since the electrical connection structure of the battery cell 120 is known in various forms, a detailed description thereof will be omitted.

On the other hand, the plurality of battery cells 120 may be grouped to form a plurality of cell groups 111, 112, 113, and 114. Accordingly, the cell stack 110 may be divided into a plurality of cell groups 111, 112, 113, and 114 in which a plurality of battery cells 120 are respectively grouped. For example, in FIG. 3, 16 battery cells 120 are stacked to form a cell stack 110, and the cell stack 110 may include four cell groups 111, 112, 113, and 114. Each cell group may include 4 battery cells 120.

However, the cell stack 110 and the cell groups 111, 112, 113, and 114 illustrated in FIG. 3 are only examples, and the number of battery cells 120 included in the cell stack 110, the number of cell groups 111, 112, 113, 114 included in the cell stack 110, and battery cells included in each cell group 120 may be variously changed. Also, each of the cell groups 111, 112, 113, and 114 may include a different number of battery cells 120. For example, some cell groups include four battery cells 120, and another cell group may include two battery cells 120.

On the other hand, each of the cell groups 111, 112, 113, and 114 may be classified according to the series and parallel connection structures of the battery cells 120. Each of the cell groups 111, 112, 113, and 114 may include a plurality of battery cells 120 electrically connected in parallel. For example, in FIG. 4, four battery cells 120 are connected in parallel to form respective cell groups 111, 112, 113, and 114, and the four cell groups 111, 112, 113, and 114 may be connected to each other in series. Alternatively, each of the cell groups 111, 112, 113, and 114 may be formed of a combination of a plurality of battery cells 120 electrically connected in parallel and a plurality of battery cells 120 connected in series. For example, among the four battery cells 120 constituting the cell groups 111, 112, 113, and 114, two battery cells 120 are connected in parallel and then two battery cells 120 connected in parallel may be connected to each other in series. However, in the present disclosure, the setting of the cell groups 111, 112, 113, and 114 is not limited by the electrical connection structure, and various changes are possible.

The cell stack 110 may include a heat insulating member 130 disposed between at least some of the battery cells 120. The insulating member 130 may block the propagation of flame or high-temperature thermal energy between the neighboring battery cells 120. Accordingly, the heat insulating member 130 may prevent a chain ignition phenomenon from occurring inside the cell stack 110. The heat insulating member 130 may include a material having at least one property among flame retardancy, heat resistance, heat insulation, and insulation. In this case, heat resistance may indicate a property that does not melt and does not change shape even at a temperature of 300 degrees Celsius or more, and thermal insulation may indicate a property of a thermal conductivity of 1.0 W/mK or less. In order to secure higher thermal insulation properties, the thermal conductivity may have a value of 0.5 W/mK or less, or 0.3 W/mK or less. Flame retardancy is a property that prevents or suppresses self-combustion when a fire source is removed, and for example, may indicate a grade of V-0 or higher in UL94 V Test. Insulation may indicate a property that is difficult to transmit electricity, and for example, in a 400V battery pack system, may indicate a material belonging to a Comparative Tracking Index (CTI) II group of 400V or higher.

For example, the heat insulating member 130 may include a material of at least a portion of mica, silica, silicate, graphite, alumina, ceramic wool, and aerogel that may perform a function of preventing heat and/or flame propagation. However, the material of the insulating member 130 is not limited thereto, and various well-known materials may be used as long as it is capable of maintaining the shape thereof in a thermal runaway situation of the battery cell 120 and preventing the propagation of heat or flame to other adjacent battery cells 120. In addition, the heat insulating member 130 may be formed of a heat insulating sheet, but may also be provided as a heat insulating pad.

The insulating member 130 may be disposed between the cell groups 111, 112, 113, and 114. For example, the heat insulating member 130 may be disposed between the first cell group 111 and the second cell group 112, between the second cell group 112 and the third cell group 113, and between the third cell group 113 and the fourth cell group 114.

In this manner, when the heat insulating member 130 is disposed between the cell groups 111, 112, 113, and 114, even if a flame or high-temperature heat is generated in a specific cell group, it is possible to prevent the flame or high-temperature heat from propagating to the cell group adjacent to the specific cell group through the accommodation space S. The heat insulating member 130 may be installed not only between the cell groups 111, 112, 113, and 114, but also between battery cells in the cell group.

On the other hand, in the cell stack 110, a compressible pad (not illustrated) may be disposed between at least some of the battery cells 120. Since the compression pad is compressed and elastically deformed when a specific battery cell 120 expands, it is possible to suppress the expansion of the entire volume of the cell stack 110. To this end, the compression pad may be formed of a polyurethane material, but the material or structure is not limited thereto. The compression pad may have a size corresponding to the wide surface of the battery cell 120, but the size may be variously changed. The compression pad may be installed to contact the heat insulating member 130. The compression pad may have a structure separate from the heat insulating member 130, but it is also possible to have a structure in which the compression pad and the heat insulating member 130 are integrated.

Next, the duct member 260 will be described with reference to FIGS. 2 and 4 to 7 together.

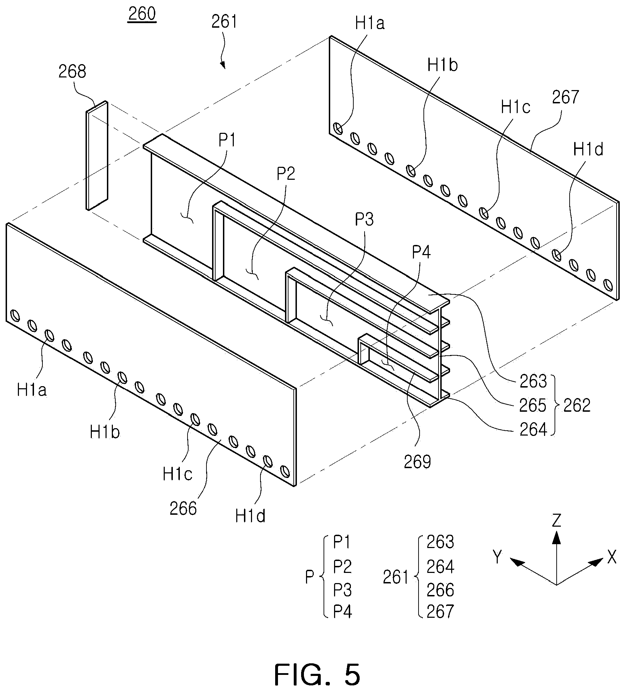

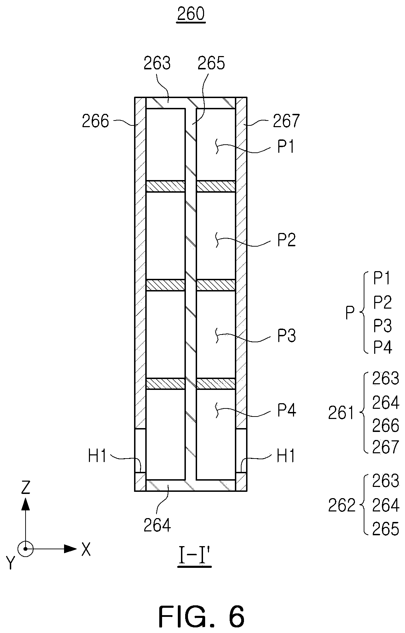

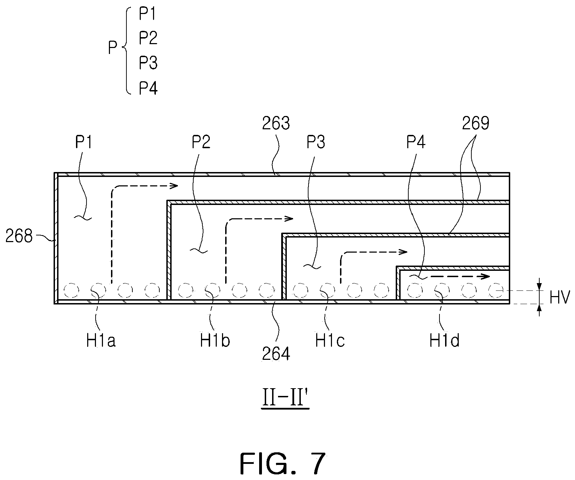

FIG. 4 is an enlarged view of the "A" part of FIG. 2, FIG. 5 is an exploded perspective view of the duct member 260 according to an embodiment, FIG. 6 is a cross-sectional view taken along line I-I' of FIG. 4, and FIG. 7 is a cross-sectional view taken along line II-II' of FIG. 4.

A flow space P in which the gas and/or flame discharged from the cell stack 110 flow may be formed in the duct member 260. At least one duct member 260 may be installed in the packing case 200. Since the duct member 260 forms a flow space P through which a high-temperature gas and/or flame passes, it may be formed of a metal material having a high melting point.

The duct member 260 may be installed to face a side surface of the cell stack 110. A flow space P may be formed inside the duct member 260. The flow space P of the duct member 260 may be divided into a plurality of flow paths P1, P2, P3, and P4 to separate the flow of gas or flames introduced through the inlet H1 from each other.

The duct member 260 may include a duct body 261 and a partition wall 269. The duct body 261 forms a flow space P having both ends open. A plurality of inlets (H1) may be formed on the side of the duct body 261 to communicate with the flow space (P) . The duct body 261 may have a shape in which the upper plate 263, the lower plate 264, the first side plate 266 and the second side plate 267 are combined to form a flow space P.

The partition wall 269 divides the flow space P formed inside the duct body 261 into a plurality of flow paths P1, P2, P3, and P4. For example, the partition wall 269 may divide the flow space P of the duct body 261 into four flow paths P1, P2, P3, and P4. In this case, three partition walls 269 may be disposed on the duct body 261. Accordingly, in the duct body 261, a first flow path P1, a second flow path P2, a third flow path P3, and a fourth flow path P4 partitioned from each other by the partition wall 269 may be formed. The plurality of flow paths P1, P2, P3, and P4 may be formed to correspond to the plurality of battery cells 120, respectively. Also, the plurality of flow paths P1, P2, P3, and P4 may be formed to correspond to the plurality of cell groups 111, 112, 113, and 114, respectively. When the cell stack 110 is divided into four cell groups 111, 112, 113, and 114, the plurality of flow paths P1, P2, P3, and P4 may be provided as spaces in which gases and/or flames generated in each cell group flow.

Each of the plurality of flow paths P1, P2, P3, and P4 may communicate with at least one inlet H1. For example, the first flow path P1 communicates with at least one first inlet H1a, the second flow path P2 communicates with the at least one second inlet H1b, the third flow path P3 communicates with the at least one third inlet H1c, and the fourth flow path P4 may communicate with at least one fourth inlet H1d. Accordingly, the gas generated from the specific cell groups 111, 112, 113, and 114 of the cell stack 110 may flow through the flow paths P1, P2, P3, and P4 corresponding to a specific cell group through the inlets H1a, H1b, H1c and H1d corresponding to a specific cell group. The gas generated in the specific cell group (111, 112, 113, 114) flows only through the flow path (P1, P2, P3, P4) corresponding to the specific cell group above the flow space (P), and may be blocked from flowing to another flow path of the flow space P by the partition wall 269. Accordingly, the gas and/or flame generated in the specific cell groups 111, 112, 113, and 114 of the cell stack 110 may be prevented from being introduced into the flow space P through the inlets H1a, H1b, H1c, and H1d and then discharged through other inlets. As described above, by forming the plurality of flow paths P1, P2, P3, and P4 partitioned for each cell group 111, 112, 113, and 114, it is possible to prevent or minimize gas and/or flames generated in some cell groups included in the cell stack 110 from affecting other cell groups included in the cell stack 110.

In order to facilitate the introduction of gas and/or flame from the battery cell 120 to the flow space P, the inlet H1 may be positioned to face the gas discharge unit 123 of the battery cell 120. The duct member 260 may have a plurality of inlets H1a, H1b, H1c, and H1d respectively corresponding to the plurality of battery cells 120. For example, the number of inlets H1 formed in the duct member 260 may correspond to the number of battery cells 120 constituting the cell stack 110. Accordingly, the gas generated in each battery cell 120 may easily flow into each of the flow paths P1, P2, P3, and P4.

The inlets H1a, H1b, H1c, and H1d may be disposed at a height (HV in FIG. 7) corresponding to the height (HV in FIG. 3) of the gas discharge unit 123 from the battery cell 120 in a position opposite to the gas discharge unit 123, such that the inflow of gas and/or flame from the battery cell 120 to the flow space P may be made more easily. In this case, the gas discharged from the gas discharge unit 123 provided in each battery cell 120 may be introduced into specific flow paths P1, P2, P3, and P4 of the flow space P through the inlet H1 corresponding to each battery cell 120.

On the other hand, the battery cell 120 formed of a prismatic secondary battery is provided with a gas discharge unit 123, and a battery cell formed of a pouch-type secondary battery does not typically include a gas discharge unit 123. In a pouch-type battery cell, the electrode assembly is accommodated in a casing (pouch) in which the electrode assembly is accommodated, and a sealing portion is formed on at least a portion of the circumference of the casing. The sealing part may also be formed in a portion where the electrode terminal (electrode lead) is disposed. A portion of the sealing portion where the electrode terminal is disposed may have lower sealing strength than other portions. Accordingly, in the pouch-type battery cell, electrolyte gas and/or flame may be ejected through the portion where the electrode terminal is disposed. In an embodiment, when the inlet (H1) is disposed at a position opposite to the electrode terminal, the gas ejected from the battery cell 120 composed of a prismatic secondary battery or a pouch-type secondary battery may easily flow in. For example, according to the embodiment, even when a pouch-type secondary battery as well as a prismatic secondary battery is used as the battery cell 120. Gas and/or flame generated from the battery cell 120 may be easily introduced into the flow space P through the inlet H1.

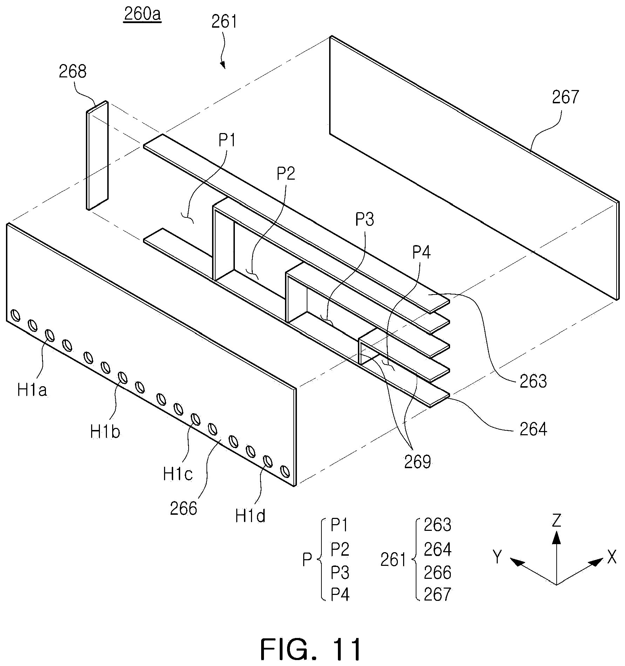

A plurality of inlets (H1; H1a, H1b, H1c, H1d) may be disposed on at least one side of the side of the duct body 261. For example, a plurality of inlets H1 (H1a, H1b, H1c, H1d) may be formed in at least one of the first side plate 266 and the second side plate 267. For example, in the case of the duct member 260 illustrated in FIGS. 5 and 6, a plurality of inlets H1 (H1a, H1b, H1c, H1d) may be formed in each of the first side plate 266 and the second side plate 267. However, it is also possible that a plurality of inlets (H1; H1a, H1b, H1c, H1d) are formed in only one of the first side plate 266 and the second side plate 267 like the duct member 260a illustrated in FIG. 11. The installation position of the inlet (H1; H1a, H1b, H1c, H1d) may be variously changed according to the path through which the high-temperature gas and/or flame flow.

The duct body 261 has both ends open and forms a flow space P extending in the second direction (Y) . The duct member 260 is a plurality of flow paths (P1, P2, P3, P4) so that the high-temperature gas and/or flame introduced into each of the flow with directionality, and one end of the open both ends of the duct body 261 may have a closed shape. For example, one end of the duct body 261 may be closed by the end plate 268. Duct body 261 may be formed with a plurality of outlets (H2) at the other end.

The partition wall 269 forms flow paths P1, P2, P3, and P4 through which the gas and/or flame introduced from the inlet H1 are discharged through the outlet H2. The duct body 261 may extend in the second direction, and an outlet H2 may be formed at an end of the duct body 261 in the second direction. Accordingly, the partition wall 269 may include a shape extending in the direction in which the duct body 261 extends, for example, in the second direction. In addition, in the case of the partition wall 269, at least a portion of the partition wall 269 may include a shape extending in the third direction, such that the gas and/or flame introduced through the inlet (H1) may move to the outlet (H2) side. Accordingly, the partition wall 269 may include a shape extending in the third direction and a shape extending in the second direction. For example, at least a portion of the partition wall 269 may include an L-shaped cross-sectional shape.

The duct body 261 may have a plurality of inlets (H1; H1a, H1b, H1c, H1d) formed on both sides in the first direction, respectively. For example, the first side plate 266 and the second side plate 267 may each have a plurality of inlets H1; H1a, H1b, H1c, and H1d. In this case, the gas and/or flame generated in the cell stack 110 disposed to face the first side plate 266 and the cell stack 110 disposed to face the second side plate 267, respectively, may be introduced into the flow space P through the inlets H1; H1a, H1b, H1c, and H1d. The duct member 260 may further include a central partition wall 265 dividing the flow space P so as to separate the flow of gas or flames respectively introduced from both sides of the duct body 261 from each other. The central partition wall 265 may have a shape that crosses the inside of the duct body 261 in a third direction perpendicular to the first direction and the second direction, respectively. Accordingly, the central partition wall 265 may form the duct frame 262 having an I-shaped cross-section together with the upper plate 263 and the lower plate 264.

In an embodiment, a plurality of inlets H1a, H1b, H1c and H1d are formed on both sides of the duct body 261, respectively, and when four flow paths P1, P2, P3 and P4 are respectively formed on one side of the duct body 261, the duct member 260 may form eight passages P1, P2, P3 and P4 partitioned from each other. However, the number of flow paths P1, P2, P3, and P4 formed in the duct member 260 may be variously changed.

Next, a flow path of gas or flames of the battery pack 100 in the embodiment will be described with reference to FIG. 8 together with FIG. 2.

FIG. 8 is a plan view of FIG. 2 and illustrates a cross-sectional view taken along line III-III'.

FIG. 8 illustrates an example in which the case body 210 is partitioned into a plurality of accommodation spaces (S in FIG. 2) by cross members 240 and 260. A cell stack 110 may be disposed in each accommodation space (S) . FIG. 8 illustrates, as an example, a configuration in which six cell stacks 110 are disposed on both sides of the partition member 240, and in this case, a total of 12 cell stacks 110 may be disposed on the case body 210. However, the number of cell stacks 110 accommodated in the case body 210 and the number or arrangement positions of the cross members 240 and 260 may be variously changed.

When the cell stack 110 is composed of four cell groups 111, 112, 113, and 114, the gas and/or flame discharged in one direction (X) of the cell stack 110 may be introduced into the duct member 260 disposed to face the side of the cell stack 110. The flow space P may be divided into a plurality of flow paths P1, P2, P3, and P4 to correspond to the plurality of cell groups 111, 112, 113, and 114. For example, the plurality of flow paths P1, P2, P3, and P4 may be formed to correspond to the plurality of cell groups 111, 112, 113, and 114, respectively. For example, the first flow path P1 corresponds to the first cell group 111, the second flow path P2 corresponds to the second cell group 112, the third flow path P3 corresponds to the third cell group 113, and the fourth flow path P4 may correspond to the fourth cell group 114. Accordingly, the gas generated in each of the cell groups 111, 112, 113 and 114 may be introduced into the flow paths P1, P2, P3, and P4 corresponding to each cell group. The gas and/or flame introduced into each of the flow paths P1, P2, P3 and P4 may be blocked from flowing into the other flow paths P1, P2, P3, and P4 by the barrier rib 269.

Each duct member 260 may be connected to the connection duct 270. The connection duct 270 may connect the duct member 260 and the venting unit 280 such that the gas flowing through the duct member 260 is discharged to the venting unit 280. Accordingly, the gas and/or flame flowing through each duct member 260 may flow through the connecting duct 270. Since no openings are formed in the connection duct 270 on the surface opposite to the cell stack 110, gas and/or flame flowing through the internal space of the connection duct 270 does not affect the cell stack 110. Therefore, unlike the flow space P of the duct member 260, the internal space of the connection duct 270 may have an undivided structure. However, in the embodiment, it is also possible to form a partitioned structure in the internal space of the connection duct 270.

In addition, the venting unit 280 for discharging the gas discharged through the outlet (H2 in FIG. 4) of the duct member 260 externally of the packing case 200 may be installed in the packing case 200. The venting unit 280 may be formed of a venting hole formed in the packing case 200, or may be configured to include a venting hole and a venting valve installed therein. The venting valve used as the venting unit 280 may have a structure that is opened when the pressure of a space in which gas and/or flame flows is equal to or greater than a set pressure. Since the venting valve is known in various structures and shapes, a detailed description thereof will be omitted.

When the venting unit 280 is formed of a venting hole, the venting hole may always have an open state. In this case, the gas generated in the accommodation space S may be discharged through the venting hole. In addition, when the venting unit 280 includes a venting valve and/or the pressure of the space in which the gas and/or flame flows is equal to or greater than the set pressure, gas may be vented through the venting valve.

In FIG. 8, gases and/or flames generated from the cell stacked body 110 on both sides of the first direction X may be introduced into the duct member 260 constituting a part of the cross members 240 and 260. In addition, gas and/or flame generated from the cell stack 110 on one side of the first direction (X) may be introduced into the duct member 260a forming the edge of the accommodation space (S).

The gas and/or flame introduced into the duct members 260 and 260a may flow toward the connection duct 270 in the direction in which the partition wall 269 extends, and may be introduced into the internal space of the connection duct 270 through the outlet (H2 in FIG. 4) . In addition, the gas flowing through the connection duct 270 may flow toward the venting unit 280 and then be discharged through the venting unit 280. FIG. 8 illustrates a configuration in which the venting unit 280 is located on the rear wall 234 of the side wall member 230, but the installation position and number of the venting unit 280 may be variously changed. For example, the venting unit 280 is installed on the front wall 231 or it is also possible to be installed on both the front wall 231 and the rear wall 234.

In addition, the connection duct 270 may be disposed between the sidewall 232 and the cell stack 110. Since the duct member 260 is disposed on both sides based on the partition member 240, the connection duct 270 may be disposed on both sidewalls 232, respectively.

On the other hand, it is also possible to form a space inside the side wall 232 and directly connect the side wall 232 and the duct member 260. In this case, the side wall 232 may function as a connection duct 270.

The high-temperature gas and/or flame introduced into the flow space (P in FIG. 4) of the duct member 260 from the cell stack 110 may flow through the duct member 260 and the connection duct 270. The high-temperature gas may have a lower temperature while flowing through the flow space P of the duct member 260 and the internal space of the connection duct 270, and the gas whose temperature is lowered may be discharged externally of the venting unit 280. As the flame flows through the flow space P of the duct member 260 and the internal space of the connection duct 270, the temperature of the flame may be lowered and the size of the flame may be reduced, and accordingly, exposure of the flame externally of the venting unit 280 maybe minimized or delayed. However, in the embodiment, the connection duct 270 is not an essential configuration, and it is also possible for the high-temperature gas and/or flame to be discharged externally of the venting unit 280 after flowing through the duct members 260 and 260a (refer to the embodiment of FIG. 9) .

In addition, in an embodiment, since the heat insulating member (130 in FIG. 3) may be disposed between the cell groups (111, 112, 113, 114), even when flame and/or high-temperature heat is generated in a specific cell group, it is possible to prevent the flame and/or high-temperature heat from propagating to a specific cell group and adjacent cell groups.

Therefore, according to the embodiment, the flames or gas generated in a specific cell group (111, 112, 113, 114) is configured to flow through the flow paths (P1, P2, P3, P4) partitioned for each cell group, and since it is possible to block the flame or high-temperature heat generated in a specific cell group from propagating to the cell group adjacent to the specific cell group by the heat insulating member 130, even if an event occurs in a specific cell group, the effect on other cell groups may be minimized.

Next, a battery pack 100 according to another embodiment will be described with reference to FIGS. 9 to 12.

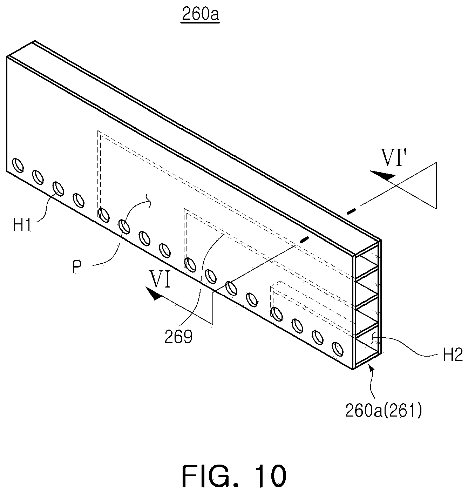

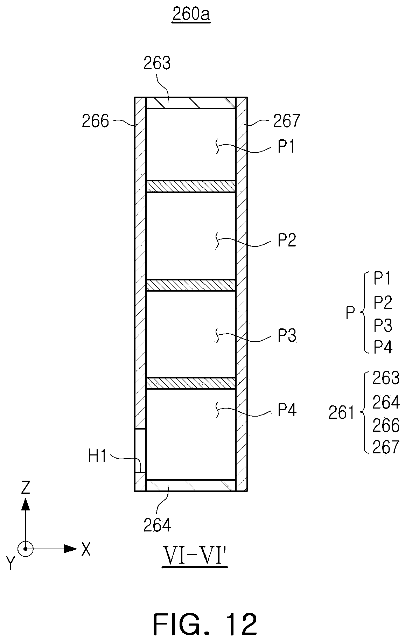

FIG. 9 is a plan view of the battery pack 100 according to another embodiment, and includes a cross-sectional view taken along lines IV-IV' and V-V', and FIG. 10 is a perspective view illustrating an example of deformation of the duct member 260. FIG. 11 is an exploded perspective view of the duct member 260 illustrated in FIG. 10, and FIG. 12 is a cross-sectional view taken along line VI-VI' of FIG. 10.

Compared to the embodiment illustrated in Figures 1 to 8, referring to FIGS. 9 to 12, there is a difference in the number and arrangement position of the cell stack 110, the number and arrangement position of the duct member 260a, and there is a difference in that the duct member 260a has a configuration connected to the venting unit 280 without interposing the connecting duct 270.

Therefore, detailed descriptions of the same or similar components are omitted to avoid unnecessary duplication, and will be replaced with the contents described in the embodiment illustrated in FIGS. 1 to 8.

Referring to FIGS. 9 to 12, the case body 210 has a structure divided into two spaces by a partition member 240 crossing the inside of the case body 210, and the case body 210 may accommodate four cell stacks 110. The duct member 260a may have a number corresponding to the number of the cell stacked body 110.

The side of the cell stack 110 has a structure opposite to the duct member 260a, and the gas generated in the cell stack 110 flows through the flow space P of the duct member 260a. Each cell stack 110 may be divided into a plurality of cell groups 111, 112, 113 and 114, and the flow space P of each duct member 260a may also be divided into a plurality of flow paths P1, P2, P3, and P4 by the partition wall 269.

Accordingly, the gas and/or flame generated in each cell group (111, 112, 113, 114) flows along the flow paths P1, P2, P3, and P4 corresponding to each of the cell groups 111, 112, 113, and 114, and may then be discharged through the venting unit 280. In the embodiment of FIG. 9, the venting unit 280 may be installed two each on the front wall 231 and the rear wall 234 of the side wall member 230.

On the other hand, in FIG. 9, the duct member 260a is provided between the side wall member 230 and the cell stack 110, but it is also possible to change the duct member (260a) to constitute the side wall member (230) . For example, the duct member 260a may be disposed instead of the sidewall 232 of the sidewall member 230.

In addition, although FIG. 9 illustrates the configuration in which two cell stacked bodies 110 are provided in the case body 210, two duct members 260a are provided between the sidewall 232 and the cell stacked body 110, and two venting units 280 are installed on the front wall 231 and the rear wall 234 of the side wall member 230, respectively; it is also possible that only one cell stack 110 is provided in the case body 210. In this case, only one duct member 260a is provided between the side wall 232 and the cell stack 110, and the venting unit 280 may be provided on only one of the front wall 231 and the rear wall 234 of the side wall member 230.

On the other hand, the cell stack 110 may be disposed on only one side surface of the duct member 260a. Accordingly, the inlet H1 may be formed on only one side of the duct member 260a. In addition, unlike the duct member 260 illustrated in FIGS. 4 to 6, the duct member 260a illustrated in FIGS. 10 to 12 does not need to include the central partition wall 265.

Referring to FIGS. 10 to 12, the duct member 260a may include a duct body 261 and a partition wall 269. The duct body 261 forms a flow space P having both ends open. The duct body 261 may have a shape in which the upper plate 263, the lower plate 264, the first side plate 266 and the second side plate 267 are combined to form a flow space P. The partition wall 269 may divide the flow space P formed inside the duct body 261 into a plurality of flow paths P1, P2, P3, and P4.

The plurality of flow paths P1, P2, P3, and P4 may communicate with at least one inlet H1a, H1b, H1c, and H1d, respectively. Since the cell stack 110 is disposed only on one side of the duct member 260a, the inlet H1 may be formed only on one of the first side plate 266 and the second side plate 267.

One end of the duct body 261 may be closed by an end plate 268. Accordingly, the high-temperature gas and/or flame introduced into each of the plurality of flow paths P1, P2, P3, and P4 may flow with directionality. Duct body 261 may be formed with a plurality of outlets (H2) at the other end.

The duct member 260a illustrated in FIGS. 10 to 12 does not have a central partition wall 265, unlike the embodiment of FIGS. 4 to 6, and there is a difference only in that the inlets H1 (H1a, H1b, H1c, H1d) are formed only on the first side plate 266. Therefore, detailed description of the detailed configuration of the duct member (260a) is omitted, and it will be replaced by the description of the duct member 260 described above.

FIG. 13 is a plan view of the battery pack 100 according to another embodiment, and includes cross-sectional views taken along lines VII-VII' and VIII-VIII'.

The embodiment illustrated in FIG. 13 is different from the battery pack 100 illustrated in FIG. 9 in that it does not include the partition member 240, and thus only includes two cell stacks 110.

A plurality of flow paths P1, P2, P3, and P4 may be formed in the duct member 260a corresponding to each of the cell groups 111, 112, 113, and 114 constituting the cell stack 110. Accordingly, the gas and/or flame generated in each cell group 111, 112, 113, 114 flows along the flow paths P1, P2, P3, and P4 corresponding to each of the cell groups 111, 112, 113, and 114, and may then be discharged externally through the venting unit 280.

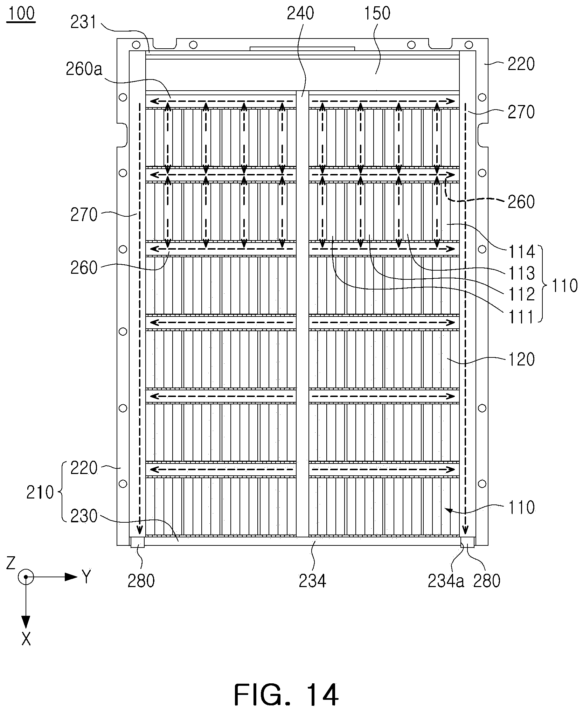

Finally, a battery pack 100 according to another embodiment will be described with reference to FIG. 14. FIG. 14 is a plan view of the battery pack 100 according to another embodiment.

Compared with FIGS. 8 and 14, the embodiment of FIG. 14 differs only in that the connecting duct 270 constitutes the side wall member 230 of the battery pack 100. Therefore, in order to avoid unnecessary duplication, a detailed description of the embodiment of FIG. 14 will be omitted, and only different configurations will be described.

In the embodiment illustrated in FIG. 14, since the connecting duct 270 constitutes the side wall member 230 of the battery pack 100, an internal space through which gas and/or flame flows may be formed inside the side wall member 230 corresponding to the connection duct 270. In this case, since the side wall 232 performs the function of the connection duct 270, there is an advantage in that the configuration of the case body 210 is simplified.

As set forth above, according to an embodiment having the configuration as above, by dividing the flow space in which the high-temperature gas or flames flows into a plurality of flow paths, the effect that it is possible to prevent or significantly reduce the gas or flames generated from some of the battery cells included in the cell stack from affecting other battery cells included in the cell stack.

In addition, according to an embodiment, an effect of delaying or significantly reducing secondary ignition and/or thermal runaway phenomenon of the cell stack may be obtained.

## Claims

1. A battery pack (100) comprising:
at least one cell stack (110) provided by stacking a plurality of battery cells (120);
a packing case (200) having an accommodating space accommodating the at least one cell stack (110); and
at least one duct member (260, 260a) disposed in the packing case (200) and having a flow space through which gas or flames discharged from the cell stack flow,
wherein the battery cell (120) has a shape extending in the first direction,
the cell stack (110) is formed by stacking the plurality of battery cells (120) in a second direction perpendicular to the first direction, and
the duct member (260, 260a) is disposed to face a side surface of the cell stack (110) and includes a plurality of flow paths partitioned from each other to separate flow of the gas or flames introduced into the flow space from each other, and
each of the plurality of flow paths communicates with at least one inlet disposed on a side surface of the duct member (260, 260a),
the duct member (260, 260a) includes a duct body (261) forming the flow space (P) and at least one partition wall (269) dividing the flow space into the plurality of flow paths, and
the at least one partition wall (269) includes a shape extending in the second direction so that gas or flames are configured to flow in the second direction.

2. The battery pack (100) of claim 1, wherein the battery cell (120) includes a casing (121) having a shape extending in the first direction, a plurality of electrode terminals (122) installed in the casing (121), and a gas discharge unit (123) for discharging the gas inside the casing (121) externally of the casing (121),
the gas discharge unit (123) is located at one or both ends of the casing (121) in the first direction, and
the inlet is located opposite to the gas discharge unit (123).

3. The battery pack (100) of claim 1 or 2, wherein the duct member (260, 260a) has a plurality of inlets corresponding to each of the plurality of battery cells (120).

4. The battery pack (100) of claim 2 or 3, wherein the inlet is disposed at a height corresponding to a height of the gas discharge unit (123).

5. The battery pack (100) of anyone of the preceding claims, wherein the battery cell (120) further includes an electrode terminal (122) at one or both ends in the first direction, and
the inlet is positioned opposite to the electrode terminal (122).

6. The battery pack (100) of anyone of the preceding claims, wherein the duct body (261) have a plurality of inlets, , and
the plurality of inlets is disposed on at least one side of the duct body (261).

7. The battery pack (100) of claim 1 or 6, wherein at least a portion (260, 260a) of the partition walls (269) includes an L-shaped cross-sectional shape.

8. The battery pack (100) of anyone of claims 1 or 6, wherein the duct member (260, 260a) has a shape in which one end of the duct body (261) is closed, and
the duct body (261) is formed with a plurality of outlets at the other end.

9. The battery pack (100) of anyone of claims 6 to 8, wherein the duct body (261) comprises a plurality of inlets formed on each of both sides of the first direction,
the duct member (260, 260a) further comprises a central partition wall (265) dividing the flow space to separate the flow of gas or flames respectively introduced from both sides of the duct body (261) from each other, and
the central partition wall (265) has a shape crossing the inside of the duct body (261) in a third direction perpendicular to the first direction and the second direction.

10. The battery pack (100) of claim 8 or 9, further comprising a venting unit (280) discharging the gas discharged through the outlet externally of the packing case (200).

11. The battery pack (100) of claim 10, further comprising a connection duct (270) connecting the duct member (260, 260a) and the venting unit (280) such that the gas flowing through the duct member (260, 260a) is discharged to the venting unit (280).

12. The battery pack (100) of anyone of the preceding claims, wherein
the cell stack (110) is divided into a plurality of cell groups (111-114) in which a plurality of battery cells (120) are each grouped, and
the plurality of flow paths are respectively formed to correspond to the plurality of cell groups (111-114).

13. The battery pack (100) of claim 12, further comprising an insulating member (130) disposed between the cell groups (111-114) to block the propagation of flame or high-temperature thermal energy between adjacent battery cells (120).

14. The battery pack (100) of anyone of the preceding claims, wherein the duct member (260, 260a) is positioned between a side wall member (230) of the packing case (200) and the cell stack (110), or constitutes a cross member (240) crossing at least a portion (260, 260a) of the packing case (200), or constitutes the side wall member (230) of the packing case (200).

## Patentansprüche

1. Batteriepack (100), umfassend:
mindestens einen Zellenstapel (110), der durch Stapeln einer Vielzahl von Batteriezellen (120) bereitgestellt wird;
ein Packungsgehäuse (200) mit einem Aufnahmeraum, der den mindestens einen Zellenstapel (110) aufnimmt; und
mindestens ein Leitungselement (260, 260a), das in dem Packungsgehäuse (200) angeordnet ist und einen Flussraum aufweist, durch den Gas oder Flammen, die von dem Zellenstapel abgegeben werden, fließen,
wobei die Batteriezelle (120) eine Form aufweist, die sich in der ersten Richtung erstreckt,
der Zellenstapel (110) durch Stapeln der Vielzahl von Batteriezellen (120) in einer zweiten Richtung senkrecht zu der ersten Richtung gebildet wird, und
das Leitungselement (260, 260a) so angeordnet ist, dass es einer Seitenfläche des Zellenstapels (110) zugewandt ist, und eine Vielzahl von Flusswegen umfasst, die voneinander getrennt sind, um den Fluss des Gases oder der Flammen, die in den Flussraum eingeführt werden, voneinander zu trennen, und
jeder der Vielzahl von Flusswegen mit mindestens einem Einlass in Verbindung steht, der an einer Seitenfläche des Leitungselements (260, 260a) angeordnet ist,
das Leitungselement (260, 260a) einen Leitungskörper (261), der den Flussraum (P) bildet, und mindestens eine Trennwand (269) umfasst, die den Flussraum in die Vielzahl von Flusswegen unterteilt, und
die mindestens eine Trennwand (269) eine Form umfasst, die sich in der zweiten Richtung erstreckt, so dass Gas oder Flammen konfiguriert sind, um in der zweiten Richtung zu fließen.

2. Batteriepack (100) gemäß Anspruch 1, wobei die Batteriezelle (120) ein Gehäuse (121) mit einer Form, die sich in der ersten Richtung erstreckt, eine Vielzahl von Elektrodenanschlüssen (122), die in dem Gehäuse (121) installiert sind, und eine Gasabgabeeinheit (123) zum Abgeben des Gases innerhalb des Gehäuses (121) außerhalb des Gehäuses (121) umfasst,
die Gasabgabeeinheit (123) an einem oder beiden Enden des Gehäuses (121) in der ersten Richtung angeordnet ist, und
der Einlass gegenüber der Gasabgabeeinheit (123) angeordnet ist.

3. Batteriepack (100) gemäß Anspruch 1 oder 2, wobei das Leitungselement (260, 260a) eine Vielzahl von Einlässen aufweist, die jeder der Vielzahl von Batteriezellen (120) entsprechen.

4. Batteriepack (100) gemäß Anspruch 2 oder 3, wobei der Einlass in einer Höhe angeordnet ist, die einer Höhe der Gasabgabeeinheit (123) entspricht.

5. Batteriepack (100) gemäß einem der vorhergehenden Ansprüche, wobei die Batteriezelle (120) ferner einen Elektrodenanschluss (122) an einem oder beiden Enden in der ersten Richtung umfasst, und
der Einlass gegenüber dem Elektrodenanschluss (122) positioniert ist.

6. Batteriepack (100) gemäß einem der vorhergehenden Ansprüche, wobei der Leitungskörper (261) eine Vielzahl von Einlässen aufweist, und
die Vielzahl von Einlässen auf mindestens einer Seite des Leitungskörpers (261) angeordnet ist.

7. Batteriepack (100) gemäß Anspruch 1 oder 6, wobei mindestens ein Abschnitt (260, 260a) der Trennwände (269) eine L-förmige Querschnittsform umfasst.

8. Batteriepack (100) gemäß einem der Ansprüche 1 oder 6, wobei das Leitungselement (260, 260a) eine Form aufweist, in der ein Ende des Leitungskörpers (261) geschlossen ist, und
der Leitungskörper (261) mit einer Vielzahl von Auslässen an dem anderen Ende ausgebildet ist.

9. Batteriepack (100) gemäß einem der Ansprüche 6 bis 8, wobei der Leitungskörper (261) eine Vielzahl von Einlässen umfasst, die auf jeder von beiden Seiten der ersten Richtung ausgebildet sind,
das Leitungselement (260, 260a) ferner eine zentrale Trennwand (265) umfasst, die den Flussraum unterteilt, um den Fluss des Gases oder der Flammen, die jeweils von beiden Seiten des Leitungskörpers (261) eingeführt werden, voneinander zu trennen, und
die zentrale Trennwand (265) eine Form aufweist, die das Innere des Leitungskörpers (261) in einer dritten Richtung senkrecht zu der ersten Richtung und der zweiten Richtung kreuzt.

10. Batteriepack (100) gemäß Anspruch 8 oder 9, ferner umfassend eine Lüftungseinheit (280), die das Gas, das durch den Auslass abgegeben wird, außerhalb des Packungsgehäuses (200) abgibt.

11. Batteriepack (100) gemäß Anspruch 10, ferner umfassend eine Verbindungsleitung (270), die das Leitungselement (260, 260a) und die Lüftungseinheit (280) verbindet, so dass das Gas, das durch das Leitungselement (260, 260a) fließt, an die Lüftungseinheit (280) abgegeben wird.

12. Batteriepack (100) gemäß einem der vorhergehenden Ansprüche, wobei
der Zellenstapel (110) in eine Vielzahl von Zellengruppen (111-114) unterteilt ist, in denen jeweils eine Vielzahl von Batteriezellen (120) gruppiert ist, und
die Vielzahl von Flusswegen jeweils so gebildet ist, dass sie der Vielzahl von Zellengruppen (111-114) entspricht.

13. Batteriepack (100) gemäß Anspruch 12, ferner umfassend ein Isolierelement (130), das zwischen den Zellengruppen (111-114) angeordnet ist, um die Ausbreitung von Flammen oder Hochtemperatur-Wärmeenergie zwischen benachbarten Batteriezellen (120) zu blockieren.

14. Batteriepack (100) gemäß einem der vorhergehenden Ansprüche, wobei das Leitungselement (260, 260a) zwischen einem Seitenwandelement (230) des Packungsgehäuses (200) und dem Zellenstapel (110) positioniert ist oder ein Querelement (240) bildet, das mindestens einen Abschnitt (260, 260a) des Packungsgehäuses (200) kreuzt, oder das Seitenwandelement (230) des Packungsgehäuses (200) bildet.

## Revendications

1. Bloc-batterie (100) comprenant :
au moins un empilement de cellules (110) fourni en empilant une pluralité de cellules de batterie (120);
un boîtier de garniture (200) ayant un espace de logement logeant l'au moins un empilement de cellules (110); et
au moins un élément de conduit (260, 260a) disposé dans le boîtier de garniture (200) et ayant un espace d'écoulement à travers lequel un gaz ou des flammes déchargés de l'empilement de cellules s'écoulent,
dans lequel la cellule de batterie (120) a une forme s'étendant dans la première direction,
l'empilement de cellules (110) est formé en empilant la pluralité de cellules de batterie (120) dans une seconde direction perpendiculaire à la première direction, et
l'élément de conduit (260, 260a) est disposé pour faire face à une surface latérale de l'empilement de cellules (110) et comprend une pluralité de trajets d'écoulement séparés les uns des autres pour séparer l'écoulement du gaz ou des flammes introduits dans l'espace d'écoulement les uns des autres, et
chacun de la pluralité de trajets d'écoulement communique avec au moins une entrée disposée sur une surface latérale de l'élément de conduit (260, 260a),
l'élément de conduit (260, 260a) comprend un corps de conduit (261) formant l'espace d'écoulement (P) et au moins une paroi de séparation (269) divisant l'espace d'écoulement en la pluralité de trajets d'écoulement, et
l'au moins une paroi de séparation (269) comprend une forme s'étendant dans la seconde direction de sorte que le gaz ou les flammes sont configurés pour s'écouler dans la seconde direction.

2. Bloc-batterie (100) selon la revendication 1, dans lequel la cellule de batterie (120) comprend un boîtier (121) ayant une forme s'étendant dans la première direction, une pluralité de bornes d'électrode (122) installées dans le boîtier (121), et une unité de décharge de gaz (123) pour décharger le gaz à l'intérieur du boîtier (121) à l'extérieur du boîtier (121),
l'unité de décharge de gaz (123) est située à une ou aux deux extrémités du boîtier (121) dans la première direction, et
l'entrée est située à l'opposé de l'unité de décharge de gaz (123).

3. Bloc-batterie (100) selon la revendication 1 ou 2, dans lequel l'élément de conduit (260, 260a) a une pluralité d'entrées correspondant à chacune de la pluralité de cellules de batterie (120).

4. Bloc-batterie (100) selon la revendication 2 ou 3, dans lequel l'entrée est disposée à une hauteur correspondant à une hauteur de l'unité de décharge de gaz (123).

5. Bloc-batterie (100) selon l'une quelconque des revendications précédentes, dans lequel la cellule de batterie (120) comprend en outre une borne d'électrode (122) à une ou aux deux extrémités dans la première direction, et
l'entrée est positionnée à l'opposé de la borne d'électrode (122).

6. Bloc-batterie (100) selon l'une quelconque des revendications précédentes, dans lequel le corps de conduit (261) a une pluralité d'entrées, et
la pluralité d'entrées est disposée sur au moins un côté du corps de conduit (261).

7. Bloc-batterie (100) selon la revendication 1 ou 6, dans lequel au moins une partie (260, 260a) des parois de séparation (269) comprend une forme de section transversale en forme de L.

8. Bloc-batterie (100) selon l'une quelconque des revendications 1 ou 6, dans lequel l'élément de conduit (260, 260a) a une forme dans laquelle une extrémité du corps de conduit (261) est fermée, et
le corps de conduit (261) est formé avec une pluralité de sorties à l'autre extrémité.

9. Bloc-batterie (100) selon l'une quelconque des revendications 6 à 8, dans lequel le corps de conduit (261) comprend une pluralité d'entrées formées sur chacun des deux côtés de la première direction,
l'élément de conduit (260, 260a) comprend en outre une paroi de séparation centrale (265) divisant l'espace d'écoulement pour séparer l'écoulement du gaz ou des flammes respectivement introduits des deux côtés du corps de conduit (261) les uns des autres, et
la paroi de séparation centrale (265) a une forme croisant l'intérieur du corps de conduit (261) dans une troisième direction perpendiculaire à la première direction et à la deuxième direction.

10. Bloc-batterie (100) selon la revendication 8 ou 9, comprenant en outre une unité de ventilation (280) déchargeant le gaz déchargé à travers la sortie à l'extérieur du boîtier de garniture (200).

11. Bloc-batterie (100) selon la revendication 10, comprenant en outre un conduit de raccordement (270) raccordant l'élément de conduit (260, 260a) et l'unité de ventilation (280) de sorte que le gaz s'écoulant à travers l'élément de conduit (260, 260a) est déchargé vers l'unité de ventilation (280).

12. Bloc-batterie (100) selon l'une quelconque des revendications précédentes, dans lequel
l'empilement de cellules (110) est divisé en une pluralité de groupes de cellules (111-114) dans lesquels une pluralité de cellules de batterie (120) sont chacune groupées, et
la pluralité de trajets d'écoulement sont respectivement formés pour correspondre à la pluralité de groupes de cellules (111-114).

13. Bloc-batterie (100) selon la revendication 12, comprenant en outre un élément isolant (130) disposé entre les groupes de cellules (111-114) pour bloquer la propagation d'une flamme ou d'une énergie thermique à haute température entre des cellules de batterie adjacentes (120).

14. Bloc-batterie (100) selon l'une quelconque des revendications précédentes, dans lequel l'élément de conduit (260, 260a) est positionné entre un élément de paroi latérale (230) du boîtier de garniture (200) et l'empilement de cellules (110), ou constitue un élément transversal (240) croisant au moins une partie (260, 260a) du boîtier de garniture (200), ou constitue l'élément de paroi latérale (230) du boîtier de garniture (200).
